# EUROPÄISCHE PATENTSCHRIFT

(11) **EP 2 929 381 B1**
(45) Veröffentlichungstag und Bekanntmachung des Hinweises auf die Patenterteilung: **19.07.2023**
(21) Anmeldenummer: 13799521.3
(22) Anmeldetag: 02.12.2013
(51) Int. Cl.: H01S 3/00, G02B 6/02, B23K 26/55

(54) **VERFAHREN UND VORRICHTUNG ZUR HERSTELLUNG VON ZUMINDEST EINEM FASER-BRAGG-GITTER**
METHOD AND APPARATUS FOR FABRICATING AT LEAST ONE FIBER BRAGG GRATING
PROCÉDÉ ET SYSTÈME POUR FABRIQUER AU MOINS UN RÉSEAU DE BRAGG À FIBRE

(30) Priorität: 06.12.2012 DE 102012222460
(43) Veröffentlichungstag der Anmeldung: 14.10.2015
(73) Patentinhaber: Fraunhofer-Gesellschaft zur Förderung der angewandten Forschung e.V., 80686 München (DE)
(72) Erfinder: SCHADE, Wolfgang, 38644 Goslar (DE); BURGMEIER, Jörg, 37520 Osterode (DE)
(74) Vertreter: Friese Goeden Patentanwälte PartGmbB
(86) Internationale Anmeldenummer: PCT/EP2013/075232
(87) Internationale Veröffentlichungsnummer: WO 2014/086708

(56) Entgegenhaltungen:
- WO-A1-2007/134438
- DE-A1-102010 001 197
- US-A1- 2005 271 349
- US-A1- 2005 271 349
- US-A1- 2009 147 807
- WIKSZAK E ET AL: "Recording of fiber Bragg gratings with femtosecond pulses using a point by point technique", LASERS AND ELECTRO-OPTICS, 2004. (CLEO). CONFERENCE ON SAN FRANCISCO, CA, USA MAY 20-21, 2004, PISCATAWAY, NJ, USA,IEEE, 16. Mai 2004 (2004-05-16), XP032015952, ISBN: 978-1-55752-777-6
- A. MARTINEZ; M. DUBOV; I. KHRUSHCHEV; I. BENNION: "Direct writing of fibre Bragg gratings by femtosecond laser", ELECTRONICS LETTERS, Bd. 40, Nr. 19, 16. September 2004 (2004-09-16), Seiten 1170-1172, XP6022671, in der Anmeldung erwähnt
- HERMAN P R ET AL: "Ultrashort-pulsed laser direct writing of strong Bragg grating waveguides in bulk glasses", OPTICAL FIBER COMMUNICATION/NATIONAL FIBER OPTIC ENGINEERS CONFERENCE, 2008. OFC/NFOEC 2008. CONFERENCE ON, IEEE, PISCATAWAY, NJ, USA, 24. Februar 2008 (2008-02-24), Seiten 1-3, XP031391656, ISBN: 978-1-55752-856-8
- GEERNAERT T ET AL: "Point-by-point fiber Bragg grating inscription in free-standing step-index, and photonic crystal fibers using near-IR femtosecond laser", OPTICS LETTERS, THE OPTICAL SOCIETY, Bd. 35, Nr. 10, 15. Mai 2010 (2010-05-15), Seiten 1647-1649, XP001553881, ISSN: 0146-9592, DOI: 10.1364/OL.35.001647
- JASON R GRENIER ET AL: "Femtosecond laser fabrication of phase-shifted Bragg grating waveguides in fused silica", OPTICS LETTERS, THE OPTICAL SOCIETY, Bd. 37, Nr. 12, 15. Juni 2012 (2012-06-15) , Seiten 2289-2291, XP001576276, ISSN: 0146-9592, DOI: 10.1364/OL.37.002289 [gefunden am 2012-06-07]
- LAI Y ET AL: "DISTRIBUTED BRAGG REFLECTOR FIBER LASER FABRICATED BY FEMTOSECOND LASER INSCRIPTION", OPTICS LETTERS, THE OPTICAL SOCIETY, Bd. 31, Nr. 11, 1. Juni 2006 (2006-06-01), Seiten 1672-1674, XP001242572, ISSN: 0146-9592, DOI: 10.1364/OL.31.001672

## Beschreibung

Die Erfindung betrifft ein Verfahren zur Herstellung von zumindest einem Faser-Bragg-Gitter in einem Wellenleiter.

Weiterhin betrifft die Erfindung eine Vorrichtung zur Erzeugung zumindest eines Faser-Bragg-Gitters in einem Wellenleiter mit zumindest einem Kern durch Bestrahlung einer Mehrzahl von Raumbereichen des Kerns mit Laserstrahlung. Faser-Bragg-Gitter der Eingangs genannten Art können in optischen Kommunikationsnetzwerken zur Signalverteilung und Signalkonditionierung eingesetzt werden. Weiterhin können Faser-Bragg-Gitter als Sensorelement für Temperaturänderungen oder mechanische Spannungen eingesetzt werden.

Aus A. Martinez, M. Dubov, I. Khrushchev and I. Bennion: "Direct writing of fibre Bragg gratings by femtosecond laser", Electronics Letters, Vol. 40, No. 19 (2004) 1170 ist bekannt, Faser-Bragg-Gitter in optischen Wellenleitern durch Punkt-für-Punkt-Belichtung mit einem Femtosekundenlaser zu erzeugen. Die Absorption der Laserstrahlung bewirkt eine Änderung des Brechungsindex, so dass an jeder Grenzfläche zwischen bestrahltem und unbestrahltem Material ein Teil des im Wellenleiter geführten Lichtes reflektiert und ein Teil des Lichtes transmittiert wird. Sofern eine Mehrzahl bestrahlter Bereiche in definiertem Abstand in Ausbreitungsrichtung hintereinander im Wellenleiter angeordnet ist, ergibt sich eine Gitterstruktur, an welcher eine vorgebbare Wellenlänge bzw. ein vorgebbarer Wellenlängenbereich reflektiert wird und Licht abweichender Wellenlänge transmittiert wird.

Nachteilig an diesem Verfahren ist jedoch der geringe Kontrast bzw. die geringe Änderung des Brechungsindex, welche durch Absorption der Femtosekundenlaserpulse induziert wird. Ein Faser-Bragg-Gitter höherer optischer Qualität kann durch größere Energie der Einzelpulse erzeugt werden. Dies erfordert jedoch einen hohen Aufwand für regenerative Verstärker, welche die Pulsenergie des zur Herstellung verwendeten Femtosekundenlasers erhöhen.

E. Wikszak et al.: "Recording of fiber Bragg gratings with femtosecond pulses using a "point by point" technique, Laser and electro-optics 2004, IEEE, ISBN: 987-1-55752-777-6 ist bekannt, Faser-Bragg-Gitter durch Belichten mit einem Laser in eine optische Faser einzuschreiben. Die verwendete Laserstrahlung weist eine Pulsdauer von 50 fs bei einer Wiederholrate von 1kHz und einer Wellenlänge von 800 nm auf.

P.R. Herman, H. Zhang: "Ultrashort-pulsed Laser direct writing of strong Bragg grating waveguides in bulk glasses", Optical fiber communication / national fiber optic engineers conference 2008, IEEE, ISBN: 978-1-55752-856-8 schlägt vor, beim Herstellen von optischen Komponenten in Glas mehrere Laserpulse auf eine Stelle zu richten. Diese weisen eine Dauer von 400 fs bei einem zeitlichen Abstand von 2 ps auf.

Aus T. Geernaert et al.: "Point-by-point fiber Bragg grating inscription in free standing step-index and photonic crystal fibers using near-IR femtosecond laser", Optics Letters Vol 35 No. 10, 1647 ist bekannt, Faser-Bragg-Gitter durch Belichten mit einem Laser in eine optische Faser einzuschreiben. Hierzu wird infrarote Laserstrahlung verwendet. Dadurch kann auf das Eintauchen in Öl während der Belichtung verzichtet werden.

Die US 2005/0271349 A1 zeigt die Herstellung eines Wellenleiters, indem der Brechungsindex eines Ausgangsmaterials durch Laserbestrahlung lokal geändert wird.

J. Grenier et al.; "Femtosecond laser fabrication of phaseshiftet Bragg grating waveguides in fused silica", Optics Letters Vol 37 No. 12, 2289 offenbart die Herstellung von Bragg-Gittern in einem Ausgangsmaterial, wobei die Belichtungszeit, die deponierte Energie, die Einschaltdauer und die Periodizität optimiert werden.

Aus Y. Lai et al.: "Distributed Bragg reflector fiber laser fabricated by femtosecond laser inscription", Optics Letters Vol 31 No. 11, 1672 ist bekannt, durch Bestrahlung mit einem Femtosekundenlaser einen Faserlaser in einer Glasfaser zu erzeugen.

Die WO 2007/134438 A1 offenbart Vorrichtungen mit periodischen Brechungsindexmodulationsstrukturen und Herstellungsverfahren hierfür unter Verwendung eines Lasers. Durch Fokussieren eines gepulsten Laserstrahls in ein transparentes Materialsubstrat kann der Brechungsindex modifiziert werden. Durch Auswahl geeigneter Laserparameter definiert der lasermodifizierte Pfad einen optischen Wellenleiter oder weitere optische Komponenten.

Aus der US 2009/147807 A1 ist ein Faserlaser bekannt. Dieser umfasst eine Faser mit einem Mantel und einem Kern mit einem (Bragg)-Gitter, das in den Kern eingeschrieben ist und eine Laserkavität bildet.

Die WO 2011/089244 A2 zeigt ein Sensorelement zur Erfassung mechanischer Zustandsgrößen, enthaltend mindestens einen Lichtwellenleiter, wobei mindestens ein Faser-Bragg-Gitter in den Lichtwellenleiter eingebracht ist, und das Sensorelement mindestens ein planares optisches Filterelement umfasst.

Aus der US 2005/271349 A1 ist ein Verfahren zum Bearbeiten eines transparenten Materials bekannt. Hierzu werden Femtosekunden-Laserpulse durch eine Linse kondensiert, und ein Glasmaterial, das geschmolzener Quarz ist, wird relativ bewegt, wobei ein Wellenleiter durch Bilden eines kontinuierlichen Bereichs mit hohem Brechungsindex gebildet wird.

Ausgehend vom Stand der Technik liegt der Erfindung somit die Aufgabe zugrunde, ein Verfahren und eine Vorrichtung zum Erzeugen von Faser-Bragg-Gittern anzugeben, welches einen geringen apparativen Aufwand erfordert und Faser-Bragg-Gitter hoher optischer Qualität bereitstellen kann.

Die Aufgabe wird erfindungsgemäß durch ein Verfahren gemäß Anspruch 1 und eine Vorrichtung gemäß Anspruch 9 gelöst.

Erfindungsgemäß wird ein Verfahren zur Herstellung von zumindest einem Faser-Bragg-Gitter in einem Wellenleiter vorgeschlagen. Der Wellenleiter kann in einigen Ausführungsformen der Erfindung ein Rippenwellenleiter sein, welcher Teil einer integrierten optischen Komponente ist. Die integrierte optische Komponente kann eine Mehrzahl optischer Elemente, beispielsweise Koppler, Interferometer oder Wellenleiter auf einem Substrat integrieren. In einigen Ausführungsformen können daneben auch elektrische Komponenten auf dem Substrat der integrierten optischen Komponente vorhanden sein, beispielsweise Photodioden oder Signalverstärker. In anderen Ausführungsformen der Erfindung kann der Wellenleiter eine optische Faser sein oder eine solche enthalten. Die optische Faser kann aus Glas oder einem Polymer gefertigt sein. Die optische Faser enthält zumindest einen Kern. Der Kern ist meist von einem Mantel umgeben. Das Material des Kerns weist einen größeren Brechungsindex auf als das Material des Mantels, so dass in den Kern eingekoppeltes Licht an der Grenzfläche zwischen Kern und Mantel totalreflektiert wird. Auf diese Weise kann sich das Licht mit geringen Verlusten entlang der Längserstreckung des Wellenleiters ausbreiten.

Im Wellenleiter ist zumindest ein Faser-Bragg-Gitter angeordnet. Das Faser-Bragg-Gitter enthält eine Mehrzahl von Raumbereichen, welche jeweils ein Teilvolumen des Kerns einnehmen und einen vom Material des Kerns abweichenden Brechungsindex aufweisen. Das Faser-Bragg-Gitter ist somit eine periodische Störung des Brechungsindex entlang der Längserstreckung des Wellenleiters. Die gesamte Längsausdehung kann zwischen etwa 5 mm und 40 mm betragen. Die Anzahl der bestrahlten Raumbereiche bzw. Teilvolumina des Kernes in einem Faser-Bragg-Gitter kann zwischen etwa 5000 und etwa 50000 variieren. In anderen Ausführungsformen der Erfindung kann die Anzahl der bestrahlten Raumbereiche bzw. Teilvolumina des Kernes in einem Faser-Bragg-Gitter zwischen etwa 100 und etwa 50000 variieren. In anderen Ausführungsformen der Erfindung kann die Anzahl der bestrahlten Raumbereiche bzw. Teilvolumina des Kernes in einem Faser-Bragg-Gitter zwischen etwa 1000 und etwa 10000 variieren.

Zur Erzeugung der einzelnen Raumbereiche des Faser-Bragg-Gitters wird erfindungsgemäß vorgeschlagen, Laserstrahlung einzusetzen. Die Laserstrahlung weist eine Mehrzahl von Pulszügen auf, welche jeweils eine Mehrzahl von Einzelpulsen enthalten. Die Pulszüge zeichnen sich dadurch aus, dass der zeitliche Abstand zwischen aufeinanderfolgenden Einzelpulsen geringer ist als der zeitliche Abstand zwischen aufeinanderfolgenden Pulszügen. Die Verwendung von Pulszügen zur Erzeugung eines einzelnen Raumbereiches eines Faser-Bragg-Gitters weist den Vorteil auf, dass die Einzelpulse sequentiell an derselben Stelle des Wellenleiters absorbiert werden und dort das Material des Kerns des Wellenleiters so modifizieren, dass sich der Brechungsindex ändert. Der zeitliche Abstand der Pulszüge definiert zusammen mit der Vorschubgeschwindigkeit des Wellenleiters den Abstand der modifizierten Raumbereiche und damit die Gitterkonstante.

Der zeitliche Abstand der Einzelpulse innerhalb eines Pulszuges kann dabei entweder so eingestellt sein, dass das Material des Kerns nach Absorption eines Einzelpulses vollständig relaxiert, ehe der nächste Einzelpuls eintrifft. In anderen Ausführungsformen der Erfindung kann der zeitliche Abstand zwischen Einzelpulsen so gering sein, dass ein nachfolgender Einzelpuls zu einem Zeitpunkt im bestrahlten Raumbereich eintrifft, zu dem sich Phononen und/oder Elektronen aufgrund des vorhergehenden Einzelpulses noch in einem angeregten Zustand befinden. Erfindungsgemäß wurde erkannt, dass bei Verwendung von Pulszügen anstelle von Einzelpulsen zur Erzeugung eines einzelnen Raumbereiches mit modifiziertem Brechungsindex die Gesamtenergie innerhalb eines Pulszuges geringer sein kann um die gleiche Änderung des Brechungsindex zu induzieren. Alternativ kann auch bei gleicher oder größerer Energie des Pulszuges im Vergleich zu den im Stand der Technik verwendeten Einzelpulsen eine größere Änderung des Brechungsindex erzeugt werden, so dass ein Faser-Bragg-Gitter mit verbessertem Kontrast erzeugt werden kann.

In einigen Ausführungsformen der Erfindung kann der zeitliche Abstand zwischen aufeinanderfolgenden Einzelpulsen zwischen etwa 10 ns und etwa 100 ps gewählt sein. In diesem Fall können Einzelpulse im Material des Kerns des Wellenleiters absorbiert werden, wenn dieses aufgrund der Absorption eines vorhergehenden Einzelpulses noch in einem phononisch oder elektronisch angeregten Zustand ist. Hierdurch können Materialmodifikationen möglich sein, welche durch einen Einzelpuls nach dem Stand der Technik nicht erzeugt werden können.

In einigen Ausführungsformen der Erfindung kann die Energie eines Pulszuges zwischen etwa 100 Nanojoule (nJ) und etwa 350 nJ betragen. Diese Energie kann von einem Laseroszillator bereitgestellt werden, ohne dass ein regenerativer Verstärker erforderlich ist. Somit kann das erfindungsgemäße Verfahren zur Herstellung von zumindest einem Faser-Bragg-Gitter mit reduziertem apparativen Aufwand durchgeführt werden.

In einigen Ausführungsformen der Erfindung kann jeder Pulszug zwischen zwei und etwa 50 Einzelpulse enthalten. In anderen Ausführungsformen der Erfindung kann jeder Pulszug zwischen etwa 15 und etwa 30 Einzelpulse enthalten. Es wurde erkannt, dass die genannte Anzahl von Einzelpulsen einerseits hinreichend ist, um Faser-Bragg-Gitter mit guten optischen Eigenschaften, insbesondere hoher Reflektivität und geringer Bandbreite, bereitzustellen. Andererseits sind diese Einzelpulse als Pulszug mit geringem technischem Aufwand erzeugbar.

Erfindungsgemäß wird die Anzahl der Einzelpulse im Pulszug und/oder der zeitliche Abstand der Einzelpulse und/oder die Amplitude der Einzelpulse und/oder die Dauer der Einzelpulse in Abhängigkeit einer Messgröße optimiert. Dies ermöglicht die Verwendung unterschiedlicher Laserstrahlung mit unterschiedlicher Zeitstruktur für unterschiedliche Wellenleiter, welche aus unterschiedlichen Materialien gefertigt sein können. Beispielsweise kann der Wellenleiter in einer integrierten optischen Komponente ein Halbleitermaterial enthalten, beispielsweise Silizium oder einen III-V-Verbindungshalbleiter. Sofern der Wellenleiter eine optische Faser enthält oder daraus besteht, kann diese ein Polymer oder ein Glas enthalten. Das genannte Optimierungsverfahren ermöglicht es, in unterschiedlichen Materialien stets Faser-Bragg-Gitter guter oder bestmöglicher Qualität zu erzeugen.

Die Messgröße ist ausgewählt aus der Reflektivität des Faser-Bragg-Gitters und/oder der Bandbreite des Faser-Bragg-Gitters und/oder der vom Pulszug erzeugten Plasmaintensität. Die ersten beiden Parameter erfassen unmittelbar die Qualität des erzeugten Faser-Bragg-Gitters. Die vom Pulszug erzeugte Plasmaintensität bestimmt die Wirkung des Pulszuges auf das Material des Wellenleiters.

Die Optimierung erfolgt mit einer Regeleinrichtung. Diese ist dazu eingerichtet, unterschiedliche Pulszüge zu generieren und das erzielte Ergebnis solange zu bewerten, bis ein Abbruchkriterium erfüllt wird. Beispielsweise kann das Abbruchkriterium so gewählt sein, dass ein Faser-Bragg-Gitter mit gewünschten Solleigenschaften erreicht wird oder dass das bestmögliche Faser-Bragg-Gitter in einer vorgebbaren Zeit erhalten wird. Die Qualität des Faser-Bragg-Gitters kann bewertet werden durch Erfassung der Reflektivität und/oder der Transmissivität, wobei eine mittlere Wellenlänge und/oder die Breite einer Wellenlängenverteilung zur Beurteilung herangezogen werden.

In einigen Ausführungsformen der Erfindung kann die Optimierung mit einem genetischen Algorithmus erfolgen. Für die Zwecke der vorliegenden Beschreibung wird unter einem genetischen Algorithmus eine Klasse von stochastischen, metaheuristischen Optimierungs- und/oder Suchverfahren verstanden, welche sich an die Grundprinzipien der biologischen Evolution anlehnen. Zu Beginn eines solchen Algorithmus kann ein zufällig ausgewählter Pulszug als mögliche Lösung des Optimierungsproblems erzeugt werden. Das damit hergestellte Faser-Bragg-Gitter wird anhand einer Fitnessfunktion bewertet, welche das zu lösende Optimierungsproblem beschreibt. Diejenigen Lösungen bzw. Pulszüge, welche die besten Fitnesswerte aufweisen, werden zufällig verändert, während die restlichen verworfen werden. Die neu gewonnenen Pulszüge werden dann wiederum bewertet, wobei die Iterationen solange fortgesetzt werden, bis ein Abbruchkriterium erreicht ist. Das Abbruchkriterium kann beispielsweise darin bestehen, ein Faser-Bragg-Gitter mit vorgebbaren Eigenschaften zu erzeugen. Der vorgeschlagene genetische Algorithmus weist im Vergleich zu anderen Optimierungsverfahren den Vorteil auf, dass nur geringes Problemwissen erforderlich ist, d.h. die Wechselwirkung des Pulszuges mit dem Material des Wellenleiters muss nicht im Detail verstanden sein.

In einigen Ausführungsformen der Erfindung können die Pulszüge durch Ein- und Ausschalten zumindest einer Laserlichtquelle erzeugt werden. Dieses Verfahren ist insbesondere für Pulszüge längerer Zeitdauer geeignet, bei welchen die Einzelpulse einen größeren zeitlichen Abstand zueinander aufweisen. Die Laserlichtquelle kann in diesem Fall ein direkt modulierbarer Halbleiterlaser sein, welcher mit kurzen Schaltzeiten durch ein elektrisches Signal ansteuerbar ist.

In einigen Ausführungsformen dieser Erfindung können die Pulszüge durch Modulation der Amplitude und/oder der Phase des Laserlichtes erzeugt werden. Diese Ausführungsform der Erfindung ist insbesondere dazu geeignet, einen spektral breitbandigen Laserpuls mit einer Pulsdauer von etwa 50 Femtosekunden bis etwa 10 Pikosekunden durch Modulation der Amplitude und/oder der Phase in einen Pulszug mit einer Mehrzahl von Einzelpulsen mit geringem zeitlichen Abstand zueinander zu wandeln.

In einigen Ausführungsformen der Erfindung weist eine zur Durchführung des Verfahrens bestimmte Vorrichtung zumindest eine Aufnahmeeinrichtung auf, in welcher der Wellenleiter befestigt werden kann und welche dazu eingerichtet ist, eine Relativbewegung zwischen dem Wellenleiter und Laserlichtquelle zu ermöglichen. Dies ermöglicht eine besonders einfache Anpassung der Gitterkonstanten des zu erzeugenden Faser-Bragg-Gitters, da sich diese aus der Vorschubgeschwindigkeit der Relativbewegung und der Repetitionsfrequenz ergibt, mit welcher die Laserlichtquelle Pulszüge aussendet.

In einigen Ausführungsformen der Erfindung kann die Laserstrahlung mittels einer Optik auf den Kern des Wellenleiters fokussiert werden. Hierdurch kann in den ausgewählten Raumbereichen des Kerns eine hohe optische Leistung konzentriert werden, welche zu einer signifikanten Änderung des Brechungsindex führt. Weiterhin können die Raumbereiche, welche das Faser-Bragg-Gitter definieren, räumlich eng begrenzt ausgeführt werden, so dass sich ein Gitter hoher Güte ergibt.

Nachfolgend soll die Erfindung anhand von Figuren ohne Beschränkung des allgemeinen Erfindungsgedankens näher erläutert werden. Dabei zeigt
- Figur 1: die schematische Darstellung eines Wellenleiters mit Faser-Bragg-Gittern.
- Figur 2: zeigt einen Ausschnitt aus einem einzelnen Faser-Bragg-Gitter.
- Figur 3: zeigt eine zur Durchführung des Verfahrens verwendbare Vorrichtung.
- Figur 4: zeigt ein Beispiel für moduliertes Laserlicht nach dem Stand der Technik.
- Figur 5: erläutert schematisch die Modulation von Laserlicht gemäß der Erfindung.
- Figur 6: zeigt die Transmission zweier Faser-Bragg-Gitter gegen die Wellenlängenabweichung für ein erfindungsgemäß erzeugtes und ein mit bekannten Verfahren erzeugtes Faser-Bragg-Gitter.
- Figur 7: zeigt Transmissionsspektren von Faser-Bragg-Gittern, welche mit unterschiedlichen Pulszügen erzeugt wurden.
- Figur 8: zeigt die Brechzahländerung in Abhängigkeit der Anzahl der Einzelpulse im Pulszug.

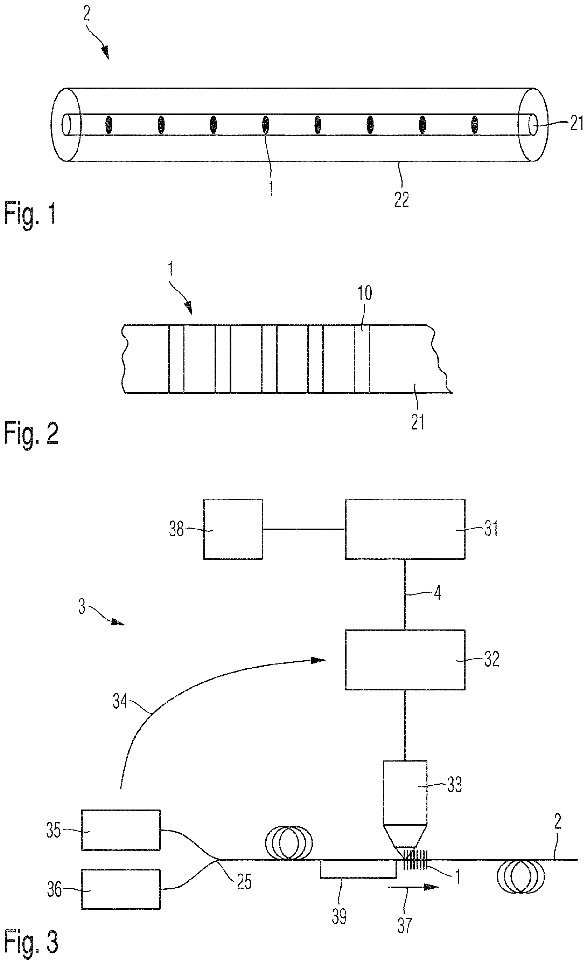

Figur 1 zeigt ein Ausführungsbeispiel eines Wellenleiters 2, welche eine Mehrzahl von Faser-Bragg-Gittern 1 enthält. Der Wellenleiter 2 enthält zumindest einen Kern 21 und einen Mantel 22. Kern und Mantel können aus einem Polymer oder einem Glas gefertigt sein. Der Mantel weist einen geringeren Brechungsindex auf als der Kern, so dass Licht innerhalb des Kerns 21 an der Grenzfläche zum Mantel 22 totalreflektiert wird und sich entlang der Längserstreckung des Wellenleiters 2 ausbreitet.

Innerhalb des Kerns ist eine Mehrzahl von Faser-Bragg-Gittern 1 angeordnet. Ein Faser-Bragg-Gitter reflektiert eine vorgebbare Wellenlänge, welche von der Gitterkonstanten des Faser-Bragg-Gitters abhängt. Andere Wellenlängen werden hingegen transmittiert. Wenn Faser-Bragg-Gitter 1 unterschiedlicher Gitterkonstante an unterschiedlichen Orten angeordnet sind, wird im Wellenleiter 2 propagierendes Licht unterschiedlicher Wellenlänge an unterschiedlichen Orten reflektiert.

Wie anhand von Figur 2 ersichtlich ist, besteht das Faser-Bragg-Gitter 1 im Wesentlichen aus einer periodischen Störung des Brechungsindex, d.h. Raumbereiche 10 weisen einen zweiten Brechungsindex n₂ auf, welcher vom Brechungsindex n₁ des Kerns 21 abweicht. Der Abstand benachbarter Raumbereiche 10 definiert die Gitterkonstante des Faser-Bragg-Gitters 1 und damit den reflektierten Wellenlängenbereich.

Erfindungsgemäß wird vorgeschlagen, die Raumbereiche durch Laserbestrahlung des Kerns 21 zu erzeugen, wobei in jeden Raumbereich 10 zumindest ein Pulszug auftrifft, welcher eine Mehrzahl von Einzelpulsen enthält. Die Einzelpulse weisen eine vorgebbare Amplitude und einen vorgebbaren zeitlichen Abstand zueinander auf.

Figur 3 erläutert eine Vorrichtung zur Herstellung von Faser-Bragg-Gittern gemäß der vorliegenden Erfindung. Im dargestellten Ausführungsbeispiel wird als Wellenleiter 2 eine optische Faser verwendet. In einigen Ausführungsformen der Erfindung kann es sich um eine für Telekommunikationszwecke gebräuchliche Faser handeln. Zur Erzeugung eines Faser-Bragg-Gitters 1 wird zumindest ein Längsabschnitt des Wellenleiters 2 in eine Aufnahmevorrichtung 39 eingespannt. Die Aufnahmevorrichtung 39 sichert eine vorgebbare Position zumindest eines Längsabschnittes des Wellenleiters 2 und ermöglicht eine Relativbewegung zwischen dem Laserlicht 4 und dem Wellenleiter 2, welche durch die Vorschubrichtung 37 dargestellt ist.

Zur Erzeugung eines Faser-Bragg-Gitters 1 muss eine Mehrzahl von Raumbereichen 10 im Wellenleiter 2 erzeugt werden, wie bereits anhand der Figuren 1 und 2 erläutert wurde. Die Gitterkonstante ergibt sich dabei aus der Vorschubgeschwindigkeit und der Repetitionsrate, mit welcher Pulszüge von der Laserlichtquelle 31 ausgesandt werden.

Die Laserlichtquelle 31 kann in einigen Ausführungsformen der Erfindung ein direkt modulierbarer Halbleiterlaser sein, welcher kurze Schaltzeiten ermöglicht. In anderen Ausführungsformen der Erfindung kann die Laserlichtquelle ein Kurzpulslaser sein oder einen solchen enthalten. Der Kurzpulslaser erzeugt in an sich bekannter Weise Laserpulse mit einer Dauer von 50 fs bis 50 ps. Das Laserlicht 4 verlässt die Laserlichtquelle 31 in Richtung des Wellenleiters 2.

Zur Erzeugung von Pulszügen steht entweder eine Einrichtung 32 zur Beeinflussung der Amplitude und/oder der Phase der von der Laserlichtquelle erzeugten Laserstrahlung zur Verfügung. In anderen Ausführungsformen der Erfindung können Pulszüge mit einer Einrichtung 38 zum Schalten der Laserlichtquelle 31 erzeugt werden. In wiederum anderen Ausführungsformen der Erfindung kann sowohl die Einrichtung 38 zum Schalten der Laserlichtquelle 31 als auch die Einrichtung 32 zur Modulation der Amplitude und/oder der Phase des Laserlichtes 4 in der Vorrichtung 3 vorhanden sein. In jedem Fall wird das Laserlicht 4 so moduliert, dass es vor Auftreffen auf den Wellenleiter 2 eine Mehrzahl von Pulszügen aufweist, wobei jeder Pulszug eine Mehrzahl von Einzelpulsen enthält, wobei der zeitliche Abstand zwischen aufeinanderfolgenden Einzelpulsen geringer ist als der zeitliche Abstand aufeinanderfolgender Pulszüge.

Das Laserlicht 4 kann mit einer optionalen optischen Einrichtung 33 fokussiert werden, so dass die Raumbereiche 10 gegenüber dem Strahlquerschnitt des Laserlichtes 4 verkleinert sind und/oder die Intensität des Laserlichtes im Kern 21 erhöht ist. Hierdurch kann erreicht werden, dass die Wechselwirkung des Laserlichtes überwiegend im Kern 21 erfolgt und der Mantel 22 des Wellenleiters 2 mit geringer Intensität und, dadurch bedingt, geringerer Absorption vom Laserlicht durchlaufen wird.

Die optische Einrichtung 33 kann zumindest eine Sammellinse und/oder eine Mehrzahl von Sammel- und/oder Zerstreuungslinsen und/oder einen oder mehrere Spiegel enthalten, um das Laserlicht 4 in gewünschter Weise zu fokussieren.

Zur Überwachung des Herstellungsverfahrens des Faser-Bragg-Gitters 1 ist vorgesehen, den Wellenleiter 2 mit einem optischen Spektralanalysator 35 zu verbinden. Der optische Spektralanalysator 35 kann die Plasmaemission im Kern 21 erfassen, welche durch den eintreffenden Pulszug ausgelöst wird. Sofern das erfasste Spektrum von einem vorgebbaren Sollspektrum oder einer Sollintensität abweicht, welches vorab ermittelt wurde, kann der Pulszug soweit verändert werden, dass die Materialmodifikation des Kerns 21 in gewünschter Weise durchgeführt wird.

In einigen Ausführungsformen der Erfindung kann der Wellenleiter 2 über einen Koppler 25 zusätzlich mit einer Lichtquelle 36 verbunden sein. Die Lichtquelle 36 kann beispielsweise einen durchstimmbaren Halbleiterlaser und/oder eine Superlumineszenzdiode oder eine andere breitbandige Lichtquelle enthalten. Das Licht der Lichtquelle 36 kann dann über den Koppler 25 in den Wellenleiter 2 eingekoppelt werden und diesen am gegenüberliegenden Ende verlassen. Während des Erzeugens des Faser-Bragg-Gitters 1 wird ein durch die Güte und Gitterkonstante des Faser-Bragg-Gitters 1 erzeugter Wellenlängenbereich reflektiert und kann im optischen Spektralanalysator nachgewiesen werden. Ein Reflektionssignal kann bereits nach dem Einschreiben von ca. 100 Gitterpunkten beobachtet werden. Somit kann in einfacher Weise überwacht werden, ob ein Faser-Bragg-Gitter mit den gewünschten Eigenschaften erzeugt wird. Sofern dies nicht der Fall ist, kann durch eine Regeleinrichtung 34, welche entweder auf die Einrichtung 32 oder die Einrichtung 38 wirkt, der Pulszug verändert werden, so dass ein weiteres Faser-Bragg-Gitter mit anderen Parametern erzeugt werden kann. Es hat sich gezeigt, dass sich bereits nach 50 bis 100 Iterationszyklen, also etwa 5000 bis 10000 geschriebenen Gitterpunkten ein für das jeweilige Material des Wellenleiters 2 optimaler Pulszug gefunden werden kann. Alle nachfolgenden Faser-Bragg-Gitter können dann ohne weitere Optimierung des Pulszuges mit diesen Einstellungen erzeugt werden, so dass eine einfache Massenherstellung von Wellenleitern 2 mit Faser-Bragg-Gittern 1 ermöglicht wird und nur geringe Rüstzeiten zur Maschineneinstellung bei Materialwechsel benötigt werden.

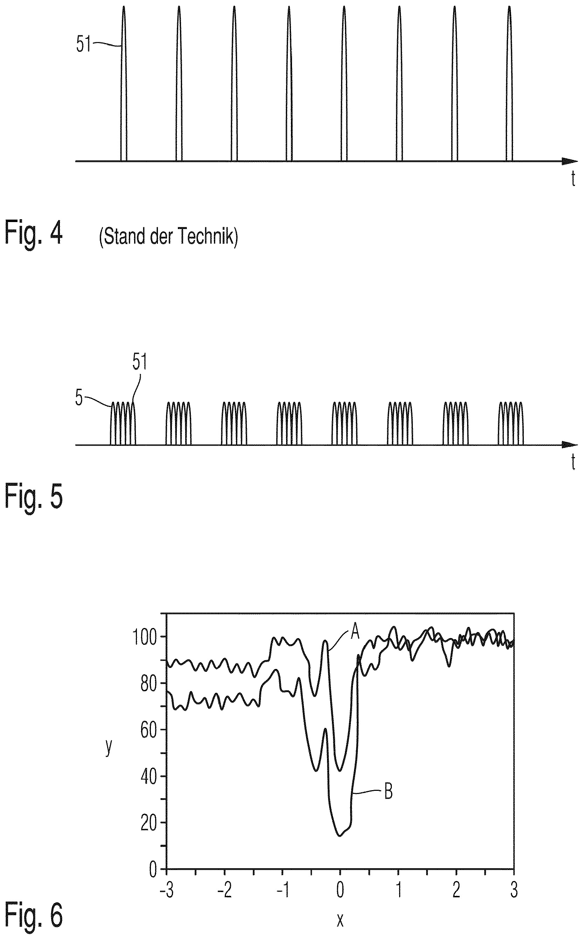

Figur 4 erläutert nochmals die Zeitstruktur des Laserlichts 4, welche nach dem Stand der Technik zur Herstellung von Faser-Bragg-Gittern verwendet wird. Das Laserlicht 4 enthält in diesem Fall eine Mehrzahl von Einzelpulsen 51, welche jeweils eine Pulsdauer von etwa 100 Femtosekunden aufweisen und mit einer Repetitionsrate von etwa 100 Hz von der Laserlichtquelle emittiert werden. Jeder Einzelpuls 51 erzeugt einen Raumbereich 10 als Teil eines Faser-Bragg-Gitters 1, so dass bei konstanter Repetitionsrate die Gitterkonstante nur noch durch die Vorschubgeschwindigkeit der Relativbewegung 37 bestimmt ist. Ein Faser-Bragg-Gitter mit beispielsweise 10000 Raumbereichen 10 kann dann in 100 Sekunden erzeugt werden.

Demgegenüber wird erfindungsgemäß vorgeschlagen, statt Einzelpulsen 51 Pulszüge 5 einzusetzen, welche jeweils eine Mehrzahl von Einzelpulsen 51 enthalten. Auch die Pulszüge 5 können mit einer Repetitionsrate von 50 Hz bis etwa 1000 Hz oder mit einer Repetitionsrate von etwa 50 Hz bis etwa 200 Hz von der Laserlichtquelle 31 erzeugt werden. Demgegenüber ist der zeitliche Abstand benachbarter Einzelpulse 51 geringer. Dieser beträgt 100 Pikosekunden bis 10 ns. Die Anzahl der Einzelpulse 51 innerhalb eines Pulszuges 5 kann mindestens 2 und maximal etwa 50 betragen. In einigen Ausführungsformen der Erfindung können etwa 15 bis etwa 30 Einzelpulse 51 in einem Pulszug 5 enthalten sein. Die Amplitude der Einzelpulse 51 kann, wie in Figur 5 dargestellt, konstant sein oder die Einzelpulse 51 können unterschiedliche Amplituden und/oder Pulsdauern aufweisen. Sofern jeder einzelne Raumbereich 10 eines Faser-Bragg-Gitters 1 von einem Pulszug 5 erzeugt wird, hängt auch in diesem Fall die Gitterkonstante des erzeugten Faser-Bragg-Gitters bei konstanter Repetitionsrate nur von der Vorschubgeschwindigkeit ab. Jedoch wird jeder Raumbereich 10 von einer Mehrzahl von Einzelpulsen 51 erzeugt, wodurch eine größere Änderung des Brechungsindex erfolgen kann und/oder die Energie eines Pulszuges kann bei gleicher Änderung des Brechungsindex geringer sein als die Energie eines Einzelpulses 51 gemäß Figur 4.

Figur 6 zeigt auf der Ordinate die Transmissionsverluste eines Faser-Bragg-Gitters und auf der Abszisse die Wellenlängenabweichung in Nanometern. Dargestellt ist im Kurvenverlauf A ein Faser-Bragg-Gitter, welches mit Einzelpulsen mit einer Pulsenergie von 470 nJ erzeugt wurde, wie anhand von Figur 4 dargestellt. Demgegenüber zeigt Kurve B der Figur 6 Messwerte für ein Faser-Bragg-Gitter, bei welchem jeder Raumbereich 10 mit einem Pulszug hergestellt wurde, welcher 20 Einzelpulse 51 enthält, welche jeweils eine Gesamtenergie von 280 nJ aufweisen. Jedes Faser-Bragg-Gitter enthält 1400 Raumbereiche 10.

Figur 6 zeigt eindeutig die geringere Transmission des erfindungsgemäß hergestellten Faser-Bragg-Gitters bei der gewünschten Reflektionswellenlänge des Faser-Bragg-Gitters, d.h. bei einer Wellenlängenabweichung von 0 Nanometern. Dies bedeutet, dass die Reflektion des Faser-Bragg-Gitters, welches nach dem erfindungsgemäßen Verfahren hergestellt wurde, vergrößert ist. Diese verbesserten Eigenschaften des Faser-Bragg-Gitters können mit dem erfindungsgemäßen Verfahren erzeugt werden, obwohl die Energie der Einzelpulse gemäß der Erfindung geringer ist als die Energie der im bekannten Verfahren eingesetzten Einzelpulse, so dass bei dem erfindungsgemäßen Herstellungsverfahren ein regenerativer Verstärker entfallen kann.

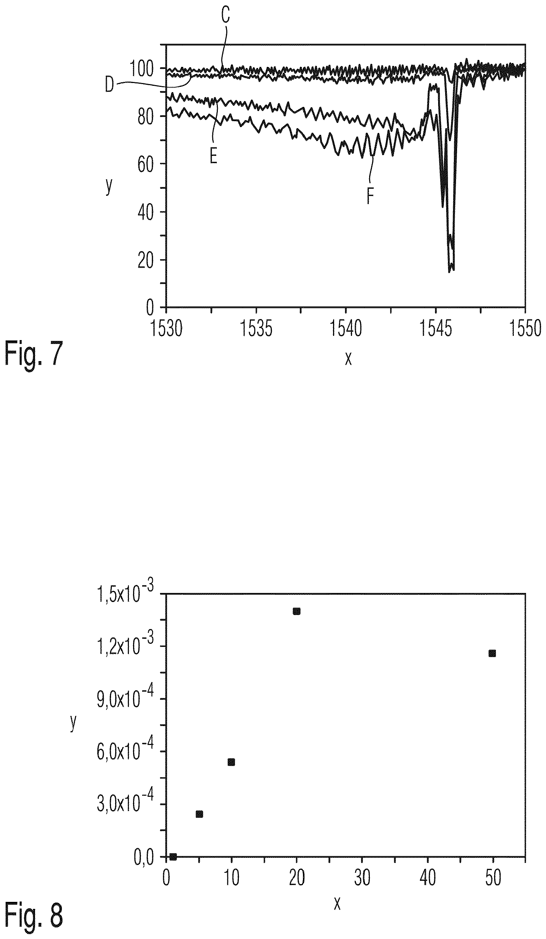

Figur 7 zeigt das Transmissionsspektrum von Faser-Bragg-Gittern auf der Ordinate und die Wellenlänge in Nanometern auf der Abszisse für Faser-Bragg-Gitter, welche mit unterschiedlichen Pulszügen erzeugt wurden. Die Pulszüge unterscheiden sich dabei durch die Anzahl der im Pulszug enthaltenen Einzelpulse. Kurve C zeigt die Transmission gegen die Wellenlänge für ein Faser-Bragg-Gitter zu dessen Erzeugung Pulszüge verwendet wurden, welche 5 Einzelpulse enthalten. Kurve D zeigt die Transmission eines Faser-Bragg-Gitters, bei welchem die Raumbereiche 10 durch Pulszüge mit jeweils 10 Einzelpulsen erzeugt wurden. Kurve E zeigt die Transmission eines Faser-Bragg-Gitters, zu dessen Herstellung Pulszüge mit jeweils 20 Einzelzügen verwendet wurden und Kurve F zeigt die Transmission eines Faser-Bragg-Gitters, zu dessen Herstellung Pulszüge mit jeweils 50 Einzelpulsen verwendet wurden. Aus Figur 7 ist ersichtlich, dass mit fünf Einzelpulsen pro Pulszug kein Faser-Bragg-Gitter erzeugt werden konnte. Bei höherer Anzahl der Einzelpulse nimmt die Transmission bei einer Wellenlänge von 1546 Nanometern ab. Dies kann auf die Erzeugung eines Faser-Bragg-Gitters im Wellenleiter zurückgeführt werden. Die Transmission bzw. Reflektion des Faser-Bragg-Gitters bei 1546 Nanometern steigt bei Erhöhung der Pulszahl rasch an. Oberhalb von 20 Pulsen pro Pulszug wird nur noch eine geringe Verbesserung erzielt.

Figur 8 zeigt die Änderung des Brechungsindex zwischen dem ersten Brechungsindex n₁ des Kerns des Wellenleiters 2 und dem zweiten Brechungsindex n₂ der Raumbereiche 10 in Abhängigkeit der Anzahl der Einzelpulse in einem Pulszug auf der Abszisse. Aus Figur 8 ist ersichtlich, dass die Änderung des Brechungsindex mit zunehmender Anzahl der Einzelpulse rasch ansteigt und bei 20 Einzelpulsen pro Pulszug ein Maximum von etwa 1,3 × 10⁻³ erreicht. Somit kann in dem untersuchten Materialsystem mit diesen Pulszügen ein qualitativ hochwertiges Faser-Bragg-Gitter erzeugt werden.

## Patentansprüche

1. Verfahren zur Herstellung von zumindest einem Faser-Bragg-Gitter (1) in einem Wellenleiter (2), wobei der Wellenleiter (2) zumindest einen Kern (21) mit einem ersten Brechungsindex (n1) aufweist und das Faser-Bragg-Gitter (1) eine Mehrzahl von Raumbereichen (10) enthält, welche jeweils ein Teilvolumen des Kerns (21) einnehmen und einen zweiten Brechungsindex (n2) aufweisen, wobei die Raumbereiche (10) jeweils durch Einwirkung von Laserstrahlung auf ein Teilvolumen des Kerns (21) erzeugt werden,
wobei
die Laserstrahlung eine Mehrzahl von Pulszügen (5) enthält, welche jeweils eine Mehrzahl von Einzelpulsen (51) enthalten, wobei der zeitliche Abstand zwischen aufeinanderfolgenden Einzelpulsen (51) geringer ist als der zeitliche Abstand zwischen aufeinanderfolgenden Pulszügen (5) und der zeitliche Abstand zwischen aufeinanderfolgenden Einzelpulsen (51) zwischen 10 ns und 100 ps gewählt ist oder der Pulszug eine Dauer von 50 fs bis 50 ps aufweist und wobei
die Anzahl der Einzelpulse (51) im Pulszug (5) und/oder der zeitliche Abstand der Einzelpulse (51) und/oder die Amplitude der Einzelpulse (51) und/oder die Dauer der Einzelpulse (51) in Abhängigkeit einer Messgröße optimiert wird, wobei die Messgröße ausgewählt ist aus der Reflektivität des Faser-Bragg-Gitters (1) und/oder der Bandbreite des Faser-Bragg-Gitters (1) und/oder der vom Pulszug (5) erzeugten Plasmaintensität, wobei zur Bestimmung der Messgröße während der Einwirkung der Laserstrahlung der Wellen¬leiter (2) mit einem optischen Spektralanalysator (35) verbunden ist und die Messgröße einer Regeleinrichtung zugeführt wird, welche unterschiedliche Pulszüge generiert und das erzielte Ergebnis solange bewertet, bis ein Abbruchkriterium erfüllt wird.

2. Verfahren nach Anspruch 1, wobei der zeitliche Abstand zwischen aufeinanderfolgenden Einzelpulsen (51) so gewählt ist, dass Einzelpulse (51) im Material absorbiert werden, wenn dieses aufgrund der Absorption eines vorhergehenden Einzelpulses noch in einem phononisch oder elektronisch angeregten zustand ist.

3. Verfahren nach einem der Ansprüche 1 oder 2, wobei die Energie eines Einzelpulses innerhalb eines Pulszuges (5) zwischen 350 nJ und 100 nJ beträgt.

4. Verfahren nach einem der Ansprüche 1 oder 3, wobei jeder Pulszug zwischen 2 und 50 Einzelpulsen enthält oder dass jeder Pulszug zwischen 15 und 30 Einzelpulsen enthält.

5. Verfahren nach einem der Ansprüche 1 bis 4, wobei das Abbruchkriterium so gewählt ist, dass ein Faser-Bragg-Gitter mit gewünschten Solleigenschaften erreicht wird oder dass das bestmögliche Faser-Bragg-Gitter in einer vorgebbaren Zeit erhalten wird.

6. Verfahren nach einem der Ansprüche 1 bis 5, wobei die Optimierung mit einem genetischen Algorithmus erfolgt, indem zu Beginn ein zufällig ausgewählter Pulszug erzeugt und das damit hergestellte Faser-Bragg-Gitter anhand einer Fitnessfunktion bewertet wird, welche das zu lösende Optimierungsproblem beschreibt und nachfolgend diejenigen Pulszüge, welche die besten Fitnesswerte aufweisen, zufällig verändert und die restlichen Pulszüge verworfen werden, wobei die Iterationen solange fortgesetzt werden, bis das Abbruchkriterium erreicht ist.

7. Verfahren nach einem der Ansprüche 1 bis 6, wobei die Pulszüge (5) durch Ein- und Ausschalten einer Laserlichtquelle (31) erzeugt werden und/oder dass die Pulszüge (5) durch Modulation der Amplitude und/oder der Phase des Laserlichtes (4) erzeugt werden.

8. Verfahren nach einem der Ansprüche 1 bis 7, wobei der Wellenleiter (2) während der Einwirkung der Laserstrahlung über einen Koppler (25) zusätzlich mit einer lichtquelle (36) verbunden ist, insbesondere mit einem durchstimmbaren Halbleiterlaser oder einer Superlumineszenzdiode.

9. Vorrichtung (3) zur Erzeugung zumindest eines Faser-Bragg-Gitters (1) in einem Wellenleiter (2) mit zumindest einem Kern (21) durch Bestrahlung einer Mehrzahl von Raumbereichen (10) des Kernes (21) mit Laserstrahlung, enthaltend
- zumindest eine Laserlichtquelle (31), welche dazu eingerichtet ist, Laserstrahlung zu erzeugen, welche eine Mehrzahl von Pulszügen (5) enthält, welche jeweils eine Mehrzahl von Einzelpulsen (51) enthalten, wobei der zeitliche Abstand zwischen aufeinanderfolgenden Einzelpulsen (51) geringer ist als der zeitliche Abstand zwischen aufeinanderfolgenden Pulszügen (5) und der zeitliche Abstand zwischen aufeinanderfolgenden Einzelpulsen (51) zwischen 10 ns und 100 ps wählbar ist oder der Pulszug eine Dauer von 50 fs bis 50 ps aufweist,
- zumindest eine Aufnahmeeinrichtung, in welcher der Wellenleiter befestigt werden kann und welche dazu eingerichtet ist, eine Relativbewegung (37) zwischen dem Wellenleiter und der Laserlichtquelle (31) zu ermöglichen
- weiterhin enthaltend einen optischen Spektralanalysator (35) zur Erfassung der Reflektivität des Faser-Bragg-Gitters (1) und/oder der Bandbreite des Faser-Bragg-Gitters (1) und/oder der vom Pulszug erzeugten Plasmaintensität , wobei der Wellenleiter (2) mit dem optischen Spektralanalysator (35) verbunden ist, sowie
- weiterhin enthaltend eine Regeleinrichtung (34), welche dazu eingerichtet ist, unterschiedliche Pulszüge zu generieren und das erzielte Ergebnis solange zu bewerteten, bis ein Abbruchkriterium erfüllt wird.

10. Vorrichtung nach Anspruch 9, weiterhin enthaltend eine Optik (33), mit welcher die Laserstrahlung (4) auf den Kern (21) des Wellenleiters (2) fokussierbar ist.

11. Vorrichtung nach einem der Ansprüche 9 oder 10, wobei diese keinen regenerativen optischen Verstärker enthält.

12. Vorrichtung nach einem der Ansprüche 9 bis 11, wobei die Laserlichtquelle (31), dazu eingerichtet ist, Laserstrahlung (4) zu erzeugen, bei welcher die Energie eines Einzelpulses innerhalb eines Pulszuges zwischen 350 nJ und 100 nJ beträgt.

13. Vorrichtung nach einem der Ansprüche 9 bis 12, wobei die Regeleinrichtung (34) dazu eingerichtet ist, die Anzahl der Einzelpulse (51) und/oder den zeitlichen Abstand der Einzelpulse (51) und/oder die Amplitude der Einzelpulse (51) und/oder die Dauer der Einzelpulse (51) und/oder den zeitliche Abstand der Pulszüge (5) zu beeinflussen.

14. Vorrichtung nach einem der Ansprüche 9 bis 13, weiterhin enthaltend eine Einrichtung (38) zum Schalten der Laserlichtquelle (31) oder eine Einrichtung (32) zur Beeinflussung der Amplitude und/oder der Phase der von der Laserlichtquelle erzeugten Laserstrahlung.

15. Vorrichtung nach einem der Ansprüche 9 bis 14, weiterhin enthaltend einen Koppler (25), welcher mit dem Wellenleiter (2) verbunden ist, und eine Licht-quelle (36), welche dazu eingerichtet sind, dem Wellen¬leiter (2) während der Einwirkung der Laserstrahlung Licht zuzuführen.

## Claims

1. Method for producing at least one fiber Bragg grating (1) in a waveguide (2), wherein the waveguide (2) has at least one core (21) having a first refractive index (n1) and the fiber Bragg grating (1) contains a plurality of spatial regions (10) which each occupy a partial volume of the core (21) and have a second refractive index (n2), wherein the spatial regions (10) are each produced by the action of laser radiation on a partial volume of the core (21), wherein the laser radiation includes a plurality of pulse trains (5) each containing a plurality of individual pulses (51), wherein the time interval between successive individual pulses (51) is shorter than the time interval between successive pulse trains (5) and the time interval between successive individual pulses (51) is chosen between 10 ns and 100 ps or the pulse train has a duration of 50 fs to 50 ps, and wherein
the number of individual pulses (51) in the pulse train (5) and/or the time interval between the individual pulses (51) and/or the amplitude of the individual pulses (51) and/or the duration of the individual pulses (51) is optimized on the basis of a measured variable, wherein the measured variable is selected from the reflectivity of the fiber Bragg grating (1) and/or the bandwidth of the fiber Bragg grating (1) and/or the plasma intensity generated by the pulse train (5), wherein for determining the measured variable during the action of the laser radiation, the waveguide (2) is connected to an optical spectrum analyzer (35) and the measured variable is supplied to a control apparatus which generates different pulse trains and assesses the result obtained until a termination criterion is satisfied.

2. Method according to claim 1, wherein the time interval between successive individual pulses (51) is chosen in such a way that individual pulses (51) are absorbed in the material when the latter is still in a phononically or electronically excited state due to the absorption of a preceding individual pulse.

3. Method according to any one of claims 1 and 2, wherein the energy of an individual pulse within a pulse train (5) is between 350 nJ and 100 nJ.

4. Method according to any one of claims 1 and 3, wherein each pulse train contains between 2 and 50 individual pulses or each pulse train contains between 15 and 30 individual pulses.

5. Method according to any one of claims 1 to 4, wherein the termination criterion is chosen in such a way that a fiber Bragg grating having desired target properties is obtained or that the best possible fiber Bragg grating is obtained in a predeterminable period.

6. Method according to any one of claims 1 to 5, wherein the optimization is carried out with a genetic algorithm by initially producing a randomly selected pulse train and assessing the fiber Bragg grating produced therewith on the basis of a fitness function which describes the optimization problem to be solved and subsequently randomly modifying the pulse trains that have the best fitness values and discarding the remaining pulse trains, wherein the iterations are continued until the termination criterion is reached.

7. Method according to any one of claims 1 to 6, wherein the pulse trains (5) are generated by switching on and off a laser light source (31) and/or the pulse trains (5) are produced by modulating the amplitude and/or the phase of the laser light (4).

8. Method according to any one of claims 1 to 7, wherein, during the action of the laser radiation, the waveguide (2) is additionally connected to a light source (36) via a coupler (25), in particular to a tunable semiconductor laser or a superluminescent diode.

9. Device (3) for producing at least one fiber Bragg grating (1) in a waveguide (2) having at least one core (21) by irradiating a plurality of spatial regions (10) of the core (21) with laser radiation, containing
- at least one laser light source (31) designed to produce laser radiation containing a plurality of pulse trains (5) each containing a plurality of individual pulses (51), wherein the time interval between successive individual pulses (51) is less than the time interval between successive pulse trains (5) and the time interval between successive individual pulses (51) is selectable between 10 ns and 100 ps or the pulse train has a duration of 50 fs to 50 ps,
- at least one support apparatus in which the waveguide can be attached and which is designed to allow a relative movement (37) between the waveguide and the laser light source (31),
- further containing an optical spectrum analyzer (35) for detecting the reflectivity of the fiber Bragg grating (1) and/or the bandwidth of the fiber Bragg grating (1) and/or the plasma intensity generated by the pulse train, wherein the waveguide (2) is connected to the optical spectrum analyzer (35), and
- further containing a control apparatus (34) which is designed to generate different pulse trains and to assess the result obtained until a termination criterion is satisfied.

10. Device according to claim 9, further containing an optical system (33), with which the laser radiation (4) can be focused on the core (21) of the waveguide (2).

11. Device according to any one of claims 9 and 10, wherein the device does not contain a regenerative optical amplifier.

12. Device according to any one of claims 9 to 11, wherein the laser light source (31) is designed to generate laser radiation (4) in which the energy of an individual pulse within a pulse train is between 350 nJ and 100 nJ.

13. Device according to any one of claims 9 to 12, wherein the control apparatus (34) is designed to influence the number of individual pulses (51) and/or the time interval between the individual pulses (51) and/or the amplitude of the individual pulses (51) and/or the duration of the individual pulses (51) and/or the time interval between the pulse trains (5).

14. Device according to any one of claims 9 to 13, further containing an apparatus (38) for switching the laser light source (31) or
an apparatus (32) for influencing the amplitude and/or the phase of the laser radiation generated by the laser light source.

15. Device according to any one of claims 9 to 14, further containing a coupler (25), which is connected to the waveguide (2), and a light source (36) designed to supply light to the waveguide (2) during the action of the laser radiation.

## Revendications

1. Procédé de réalisation d'au moins un réseau de Bragg à fibre (1) dans un guide d'ondes (2), le guide d'ondes (2) comprenant au moins un coeur (21) avec un premier indice de réfraction (n1), et le réseau de Bragg à fibre (1) présentant une pluralité de zones spatiales (10) qui occupent chacune un volume partiel du coeur (21) et qui présentent un deuxième indice de réfraction (n2), les zones spatiales (10) étant générées chacune par l'action d'un rayonnement laser sur un volume partiel du coeur (21),
dans lequel
le rayonnement laser comprend une pluralité de trains d'impulsions (5) qui comprennent chacun une pluralité d'impulsions individuelles (51), l'intervalle de temps entre des impulsions individuelles (51) successives étant inférieur à l'intervalle de temps entre des trains d'impulsions (5) successifs, et l'intervalle de temps entre des impulsions individuelles (51) successives étant choisi entre 10 ns et 100 ps ou le train d'impulsions ayant une durée de 50 fs à 50 ps, et
le nombre d'impulsions individuelles (51) dans le train d'impulsions (5) et/ou l'intervalle de temps des impulsions individuelles (51) et/ou l'amplitude des impulsions individuelles (51) et/ou la durée des impulsions individuelles (51) sont optimisés en fonction d'une grandeur de mesure, la grandeur de mesure étant choisie parmi la réflectivité du réseau de Bragg à fibre (1) et/ou la largeur de bande du réseau de Bragg à fibre (1) et/ou l'intensité du plasma générée par le train d'impulsions (5),
pour déterminer la grandeur de mesure pendant l'action du rayonnement laser, le guide d'ondes (2) est relié à un analyseur spectral optique (35), et la grandeur de mesure est amenée à un organe de régulation qui génère différents trains d'impulsions et qui évalue le résultat obtenu jusqu'à ce qu'un critère d'interruption soit rempli.

2. Procédé selon la revendication 1,
dans lequel l'intervalle de temps entre des impulsions individuelles (51) successives est choisi de telle sorte que les impulsions individuelles (51) sont absorbées dans le matériau si celui-ci est encore dans un état excité par voie phononique ou électronique en raison de l'absorption d'une impulsion individuelle précédente.

3. Procédé selon l'une des revendications 1 ou 2,
dans lequel l'énergie d'une impulsion individuelle au sein d'un train d'impulsions (5) est comprise entre 350 nJ et 100 nJ .

4. Procédé selon l'une des revendications 1 ou 3,
dans lequel chaque train d'impulsions comprend entre 2 et 50 impulsions individuelles, ou chaque train d'impulsions comprend entre 15 et 30 impulsions individuelles.

5. Procédé selon l'une des revendications 1 à 4,
dans lequel le critère d'interruption est choisi de manière à obtenir un réseau de Bragg à fibre ayant des propriétés de consigne souhaitées ou à obtenir le meilleur réseau de Bragg à fibre possible dans un temps prédéfinissable.

6. Procédé selon l'une des revendications 1 à 5,
dans lequel l'optimisation s'effectue à l'aide d'un algorithme génétique, en générant au début un train d'impulsions choisi au hasard et en évaluant le réseau de Bragg à fibre ainsi produit à l'aide d'une fonction de fitness qui décrit le problème d'optimisation à résoudre, et en modifiant ensuite au hasard les trains d'impulsions qui présentent les meilleures valeurs de fitness et en rejetant les trains d'impulsions restants, les itérations se poursuivant jusqu'à ce que le critère d'interruption soit atteint.

7. Procédé selon l'une des revendications 1 à 6,
dans lequel les trains d'impulsions (5) sont générés en allumant et en éteignant une source de lumière laser (31), et/ou les trains d'impulsions (5) sont générés en modulant l'amplitude et/ou la phase de la lumière laser (4).

8. Procédé selon l'une des revendications 1 à 7,
dans lequel, pendant l'action du rayonnement laser, le guide d'ondes (2) est en supplément relié à une source de lumière (36) par l'intermédiaire d'un coupleur (25), en particulier à un laser à semi-conducteur accordable ou à une diode superluminescente.

9. Dispositif (3) destiné à générer au moins un réseau de Bragg à fibre (1) dans un guide d'ondes (2) ayant au moins un coeur (21) par irradiation d'une pluralité de zones spatiales (10) du coeur (21) avec un rayonnement laser, comprenant
- au moins une source de lumière laser (31) qui est conçue pour produire un rayonnement laser qui comprend une pluralité de trains d'impulsions (5) qui comprennent chacun une pluralité d'impulsions individuelles (51), l'intervalle de temps entre des impulsions individuelles (51) successives étant inférieur à l'intervalle de temps entre des trains d'impulsions (5) successifs, et l'intervalle de temps entre des impulsions individuelles (51) successives pouvant être choisi entre 10 ns et 100 ps, ou le train d'impulsions ayant une durée de 50 fs à 50 ps,
- au moins un organe de réception dans lequel le guide d'ondes peut être fixé et qui est conçu pour permettre un mouvement relatif (37) entre le guide d'ondes et la source de lumière laser (31),
- comprenant en outre un analyseur spectral optique (35) pour détecter la réflectivité du réseau de Bragg à fibre (1) et/ou la largeur de bande du réseau de Bragg à fibre (1) et/ou l'intensité du plasma générée par le train d'impulsions, le guide d'ondes (2) étant relié à l'analyseur spectral optique (35), et
- comprenant en outre un organe de régulation (34) qui est conçu pour générer différents trains d'impulsions et pour évaluer le résultat obtenu jusqu'à ce qu'un critère d'interruption soit rempli.

10. Dispositif selon la revendication 9,
comprenant en outre une optique (33) permettant de focaliser le rayonnement laser (4) sur le coeur (21) du guide d'ondes (2).

11. Dispositif selon l'une des revendications 9 ou 10,
dans lequel celui-ci ne comprend pas d'amplificateur optique régénératif.

12. Dispositif selon l'une des revendications 9 à 11,
dans lequel la source de lumière laser (31) est conçue pour produire un rayonnement laser (4) dont l'énergie d'une impulsion individuelle au sein d'un train d'impulsions est comprise entre 350 nJ et 100 nJ.

13. Dispositif selon l'une des revendications 9 à 12,
dans lequel l'organe de régulation (34) est conçu pour influencer le nombre d'impulsions individuelles (51) et/ou l'intervalle de temps des impulsions individuelles (51) et/ou l'amplitude des impulsions individuelles (51) et/ou la durée des impulsions individuelles (51) et/ou l'intervalle de temps des trains d'impulsions (5).

14. Dispositif selon l'une des revendications 9 à 13,
comprenant en outre un organe (38) pour commuter la source de lumière laser (31) ou un organe (32) pour influencer l'amplitude et/ou la phase du rayonnement laser produit par la source de lumière laser.

15. Dispositif selon l'une des revendications 9 à 14,
comprenant en outre un coupleur (25) relié au guide d'ondes (2) et une source de lumière (36), qui sont conçus pour fournir de la lumière au guide d'ondes (2) pendant l'action du rayonnement laser.
